# EUROPEAN PATENT SPECIFICATION

(11) **EP 4 179 907 B1**
(45) Date of publication and mention of the grant of the patent: **13.03.2024**
(21) Application number: 21740111.6
(22) Date of filing: 15.06.2021
(51) Int. Cl.: A41D 27/24, D06M 11/77

(54) **METHOD AND SYSTEM FOR MANUFACTURING A PRODUCT PROVIDED WITH A CAVITY**
VERFAHREN UND SYSTEM ZUR HERSTELLUNG EINES MIT EINEM HOHLRAUM VERSEHENEN PRODUKTS
PROCÉDÉ ET SYSTÈME PERMETTANT DE FABRIQUER UN PRODUIT POURVU D'UNE CAVITÉ

(30) Priority: 19.06.2020 ES 202030596
(43) Date of publication of application: 17.05.2023
(73) Proprietor: Mat Product & Technology, SL, 08223 Terrassa (ES)
(72) Inventor: BELL, Colin Ramsay, 08015 Barcelona (ES); MATEU CODINA, Xavier, 08230 Matadepera (ES)
(74) Representative: Sugrañes, S.L.P.
(86) International application number: PCT/ES2021/070439
(87) International publication number: WO 2021/255311

(56) References cited:
- WO-A1-02/06578
- WO-A2-01/74186
- JP-A- H04 197 848
- RU-C1- 2 373 309

## Description

### Technical field of the invention

The invention relates to a method for manufacturing a product that is waterproof and provided with a cavity, such as a glove, a shoe, a sports shoe or a backpack.

Cavity is understood to be a hollow space open on one side that, for example, there is in a glove or a sports shoe to insert a hand or a foot, and an inner hollow space of a backpack to accommodate the objects that the user wants to store therein, which can be accessed for example by opening a zipper or lifting a flap.

The invention also relates to a system for carrying out said method.

### Background of the invention

In the fashion sector, and particularly in sportswear, the existence of products such as gloves, footwear and backpacks that are waterproof, and optionally also windproof and breathable (permeable to water vapour), is well-known.

Most of these products are produced by first making an outer structure of the product in a leather material or similar, textile material, or a combination thereof, which is not waterproof, by stitching several portions of the material connected by conventional needle and thread stitching together.

Subsequently, a pre-constructed inner mould, lining or form is arranged, produced from a waterproof and breathable membrane material. This inner mould, lining or form is introduced and fixed inside the outer structure to deliver waterproofness to the product. In some cases, this inner mould, lining or form is partially or completely attached to the interior of the outer structure by means of a discontinuous adhesive layer of thermoplastic applied to the outer surface of the inner mould, lining or form, which then melts under pressure and temperature and is attached to the inner surface of the outer structure.

Document WO0174186-A2 A discloses a method for making a shaped object. A mould is disposed between two layers of fabric, with joining layer therebetween. The upper fabric layer has a greater surface area than the lower layer, so that the final garment has a natural curvature. Further embodiments respectively describe how garment inserts may be joined by a vacuum draw-down process and by the use of adhesive cups.

Thus, it is usual for waterproof and breathable gloves and footwear to be manufactured in the indicated manner by stitching together portions of leather or textile materials, thus generating a series of seams between the portions. For example, to manufacture the outer structure of a glove, two portions are cut in the shape of a hand template, one portion for the face that will cover the palm and another portion for the face that will cover the knuckles, with attachment seams along the length of the perimeter, including the space between the fingers. The joint seams between portions comprise a series of stitches that inevitably leave holes as the stitch thread passes, so that the articles or products, if they are not sealed, are no longer waterproof and windproof at the seams.

Document WO0206578-A1 discloses a method of seam sealing fabrics using spray for greater fluid-resistance includes placing a fabric having an existing seam through feed rollers and spraying flowable sealant onto the existing seam. Atomized liquid silicone or other sealant flows out of a spray nozzle, expanding expands outwardly and resulting in a sprayed area of uniform thickness in the middle and tapering out along the edges to form a smooth transition to the fabric.

However, at present, apart from the use of an atomized liquid sealant, it is not possible to seal these seams using sealing methods used for conventional products or articles of this type due to the fact that the radius of the seam and the dimension of the seams are generally too small for feasible manufacture. Thus, it would be desirable to provide an alternative method for performing this sealing and thus obtaining products or articles provided with a cavity such as gloves, footwear and backpacks completely waterproof and that were compatible with the option that the products were breathable and windproof.

### Description of the invention

The object of the invention provides a method for manufacturing a product or article that is waterproof and provided with a cavity (open or closed but accessible) such as a glove, a shoe or a backpack as defined in claim 1.

The method object of the invention comprises firstly preparing a structure with the shape and outer surface of the product to be manufactured, attaching portions of laminated material such as laminated natural or synthetic leather, or a laminated material based on leather, a laminated textile material, or a laminated substrate, using conventional stitching methods, creating seams provided with stitches at the edges for attachment between the portions. On this structure a waterproof and windproof sealing is performed following the rest of the steps of the method.

As a clarification, it is noted that a laminated leather is a tanned leather to which a plastic sheet or membrane is adhered to the grain of the leather (the upper portion) with heat and pressure, achieving uniformity on the entire surface of the leather. A laminated textile material is that formed by a fabric to which a plastic sheet or membrane is adhered, on the unseen face thereof. Both laminated leather and laminated textile or laminated substrate are materials that are waterproof, and in many cases they can also be windproof and breathable.

Among the laminated materials that are envisaged, it is worth mentioning that the laminated (natural or synthetic) leather materials or those based on leather include laminated natural leather, laminated synthetic leather, and other types of laminated materials similar to laminated leather, such as bicast leather or reconstituted leather materials. Bicast leather laminate is made of solid pieces of leather that are given an artificial coating and subsequently the plastic sheet or membrane is added. In contrast, reconstituted leather ones, also called consolidated leather or mixed leather, comprise a layered structure of a paper fibre or support covered with a layer of shredded leather fibres mixed with a polyurethane binder that is embossed with a texture similar to leather. Reconstituted leather is also referred to as engineering leather by some manufacturers, as it is an advanced material made with up to 50% traditional leather fibres, which retains the appearance of traditional leather but is endowed with greater resistance to scratches, scuffs and has controlled stretch, enabling it to maintain the initially given shape thereof, according to specific manufacturing methods.

Laminated textiles and laminated substrates can be formed, in the structure that is attached to the plastic sheet or membrane, by natural or synthetic fibres, woven or non-woven, and the laminated substrates can also have a synthetic matrix on which fibres of synthetic natural origin are arranged.

In accordance with the method of the invention, once the structure has been created, a thermally-curable silicone compound material, also known as crosslinking silicone, is subsequently applied to the seams, preferably with the aid of a paintbrush or a brush, while this silicone compound is in an uncured liquid state. By spreading the thermally-curable silicone compound on the seams, including the edges or ends of the portions that face to form the seam, some of the compound remains on the stitches generated by stitching the portions.

Stitch is understood to be each one of the holes made with a needle, awl or other similar instrument, in the fabric, leather or other material that is being stitched. It should be mentioned that the seams themselves, where the edges of the portions are attached, are on the inner face or surface of the structure of the product or article, that which is not seen from the outside when the user normally uses it. Therefore, in order to apply the thermally-curable silicone compound, the outer structure has to be turned inside-out in order to apply it well to all seams.

Then, once the silicone compound has been applied to the seams, the structure is arranged inside a chamber or oven and subjected to a curing temperature of the silicone compound material, preferably comprised between 115°C and 150°C, for a period also preferably between 2 and 30 minutes, and more preferably between 5 and 20 minutes, to cure the silicone compound. The curing temperature and time will depend on the features of the thermally-curable silicone compound. For example, there are silicone compounds that cure at 150°C in 30 minutes and others that when cured at 150°C, do so in just 10 minutes.

Simultaneously at the beginning of the heating, a vacuum is also performed by sucking the air from the chamber or oven that is outside the structure into the structure (towards the cavity thereof) through the seams thereof, and from there said air is extracted outside, specifically out of the chamber or oven wherein the structure is located turned inside out. This is carried out by means of pumping means and this vacuum operation causes the curable silicone compound, in liquid state, to enter and penetrate into the seam stitch holes of the structure.

Once the compound is fully cured by means of heating to the curing or crosslinking temperature, the orifices or holes of the stitches are filled with a soft and flexible silicone gel, but very dimensionally stable with temperature. The silicone gel penetrates at least a depth from the beginning of the hole equivalent to 30% of the total depth of the hole (total thickness that crosses the stitch) when a vacuum is performed. The beginning of the hole (hole in the inner surface of the stitched structure) is where the compound is applied in liquid state, having turned the structure inside out, leaving on the outside the surface that corresponds to the inner surface of the stitched structure of the product in its normal use, and leaving on the inside the outer surface of the outer structure of the product (glove, shoe, backpack, etc.), and by the action of the vacuum to which the structure is subjected inside the chamber or oven, the silicone compound material goes into the holes of the stitches until they are plugged, and the same happens in the spaces that may exist in the seam between the edges of two stitched portions.

It should be noted that, preferably, the simultaneous application of temperature and vacuum by extraction of air on the turned inside out structure is performed, as has been said, in an oven or chamber, but specifically, in said oven or chamber the structure is arranged fitted with a certain tightness on a hollow inner mould or skeleton the outer surface of which reproduces the inner shape of the structure.

The hollow inner mould or skeleton is provided with a plurality of vacuum openings that communicate the outside of the inner mould or skeleton with the inner cavity thereof, the vacuum openings being crossed by the air from outside the structure (the air from inside the chamber or oven) that is sucked into the structure when a vacuum is performed. The vacuum openings of the inner mould or skeleton may be configured as through holes, as meshes of a net from which the inner mould or skeleton is made, or as elongated slits. Meshes are understood to be the quadrilaterals or polygons formed by ropes, threads or wires that intersect and are knotted at the apexes thereof, which constitute a network.

The hollow inner mould can be formed by a metal frame provided with holes or slits, or by a structure of wire or threads that form a mesh network. Alternatively, it can be formed by a body generated with a 3D printer in which the slits, meshes or holes that form the vacuum openings are already generated, for example, said body being able to be made of a plastic material resistant to the curing temperature of the silicone compound material so that the shape thereof remains stable despite heating.

Thus, in the oven or chamber, the heated air that externally surrounds the inner mould or skeleton is sucked by pumping means into the inner hollow of the mould to then expel it out of the oven or chamber, thus creating a vacuum inside the inner mould or skeleton. As the stitched structure is turned inside out on the inner mould or skeleton, the hot air sucked in through the vacuum openings of the inner mould or skeleton is also introduced through the stitch holes of the seams of the structure inside the mould and thus the silicone compound material is also introduced into the stitch holes and in the spaces that remain in the seams between the edges of the stitched portions. The ideal situation is that a moment is reached when no more air it is able to be pulled inside, which will indicate that the stitch holes and the spaces between portions of the seams are completely blocked by the silicone gel.

The inner mould or skeleton, in addition to enabling the creation of a vacuum within the inside out turned structure, also serves as a support for said turned structure when the thermally-curable silicone compound, in liquid state, is applied to it with a paintbrush or a brush, on all the seams (including all stitches and gaps between the edges of two stitched portions). The compound must be applied in all the meeting points between facing portions of laminated material (leather or similar, textile or substrate) from which the stitched structure is made, in addition to in all the stitches of the seams, to guarantee correct sealing once the process is finished.

The temperature causes the silicone compound material to cure and acquire the solid and flexible state thereof, and the vacuum causes said material to fill the stitch holes to a great extent, entering to a depth of at least 30% of the total depth or length of each hole (equivalent to the thickness of the portion or portions of the laminated material), while it is curing, so that the stitched structure is sealed at the seams thereof.

Finally, the structure already sealed at the seams thereof is removed, it is turned the right way round and it can already be said that the outer structure of the product is waterproof, without visually appreciating the sealing performed so that the aesthetics of the product is not seen affected. If the material of the stitched portions of laminated material was windproof and breathable, the structure sealed at the seams thereof will continue to be so, since the method does not affect these intrinsic features of the material used for manufacturing the product. Depending on the design of the final product, the necessary finishing operations will be performed on the structure, such as putting a soft inner lining, a rubber or closure on the wrist portion (in the case of a glove), etc.

According to a second aspect of the invention, a system for manufacturing a product that is waterproof and provided with a cavity, such as a glove, a shoe, a sports shoe or a backpack, as defined in claim 14 is also disclosed, wherein the product comprises a structure with the shape and outer surface of the product, provided with a cavity, the structure being made up of portions of laminated material such as laminated natural or synthetic leather, and/or a laminated material based on leather, and/or a laminated textile material, and/or a laminated substrate, the portions being stitched and attached together by corresponding seams.

The system object of the invention is characterised in that it comprises:
- a plurality of hollow inner moulds or skeletons the outer surface of which reproduces the inner shape of the structure of the product, each inner mould or skeleton being provided with a plurality of vacuum openings that communicate the outside of the inner mould or skeleton with the cavity thereof;
- a chamber or an oven with room to arrange inside a group of the pluralityof hollow inner moulds or skeletons, provided with heating means,
- respective pumping means to create the vacuum inside a respective inner mould or skeleton, capable of being activated when the respective hollow inner mould or skeleton is arranged inside the chamber or oven, sucking the air from outside the inner mould or skeleton into the cavity thereof through the vacuum openings and extracting said sucked air out of the cavity and the chamber or oven, and
- a conveyor belt, band or strap in which each hollow inner mould or skeleton is connected to respective pumping means suitable for creating a vacuum inside the respective inner mould or skeleton, the chamber or oven extending longitudinally in the direction of advance of the conveyor belt, band or strap, and being configured with two ends provided with means to enable the inlet and outlet of a group of the plurality of inner moulds or skeletons to/from the chamber or oven.

### Brief description of the drawings

The attached drawings illustrate, by way of non-limiting example, portions of the stitched structure from which a product provided with a cavity, such as a glove, is manufactured according to the method object of the invention, as well as two embodiments of systems for manufacturing the product according to the method of the invention. In said drawings:
Figure 1 schematically shows a cross section of two portions of laminated material, such as laminated leather, attached by stitching, of the stitched structure, the direction of the depth of a stitch of the attachment seam between said portions being marked with a dashed line;
Figure 2 is an enlarged view of the seam of Figure 1 showing the applications of thermally-curable silicone in liquid state at the ends of the stitch and at the ends of the laminated material portions of the seam;
Figure 3 is an enlarged view of the seam of Figure 1 when the method object of the invention has finished, showing the cured silicone inside the hole of the stitch;
Figure 4 schematically shows a first embodiment of a system, which is not encompassed by the present invention, in which the step of sealing the seams of the stitched structure is carried out to manufacture the product or article, in this case a glove, according to the method object of the invention;
Figure 5 shows a hollow inner mould or skeleton formed by a net provided with meshes that cross it, as an alternative to the inner mould or skeleton represented in Figure 4, with some of the pumping means;
Figure 6 shows a third embodiment of the hollow inner mould or skeleton provided with slits for the passage of air therethrough, with some of the pumping means;
Figure 7 schematically shows an embodiment of the system according to the present invention in which the step of sealing the seams of the stitched structure is carried out to manufacture the product according to the method object of the invention.

### Detailed description of the drawings

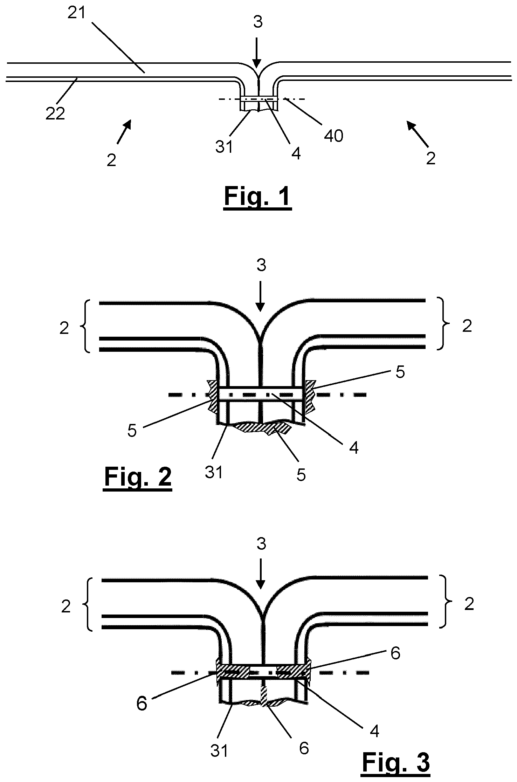

Figure 1 shows a cross section of two portions 2 of laminated material, such as laminated leather or a laminated textile material, attached by stitching, which form part of a stitched structure for manufacturing a product or article provided with a cavity, such as a glove, a shoe, a sports shoe or a backpack.

Laminated leather is a tanned leather to which a plastic sheet or membrane 22 is adhered to the grain of the leather 21 (the upper portion) with heat and pressure, achieving uniformity on the entire surface of the leather. Similarly, a laminated textile material is that formed by a fabric (which would be comparable to the grain of the leather 21) to which a plastic sheet or membrane 22 adheres, on the non-visible face thereof. Laminated leather and laminated textile material are waterproof materials, and in many cases they are also windproof and breathable (permeable to water vapour), so it is very advantageous to manufacture products or articles from them such as gloves, shoes, sports shoes (for example, for sports practice), boots or backpacks so that these products also exhibit these properties.

The portions 2 are intended to be made of any one of the following laminated materials: laminated leathers or leather-based laminates, including laminated natural leathers, laminated synthetic leathers, and other types of laminated materials similar to laminated leather, such as bicast leather or reconstituted leather materials; laminated textile materials and laminated substrates, the structure that is attached to the plastic sheet or membrane being able to be formed by natural or synthetic fibres, woven or non-woven, and the laminated substrates being able to further exhibit a synthetic matrix on which fibres of synthetic natural origin are arranged.

To carry out the manufacture of these products, first a structure 10 is made with the shape of the product by stitching portions 2 of laminated material attached together by corresponding seams 3, that is, joining the portions 2, facing them or partially overlapping them and stitching them together so that they stay together. This structure 10 is the part of the product that will remain on the outside once finished, with the shape and surface thereof, that is, as an outer structure of the glove, shoe, or backpack that is manufactured. When joining the portions 2 by means of seams 3, it must be taken into account that when passing the thread that holds the portions 2 together, the needle or tool creates stitches 4 in the portions 2 of laminated material. These stitches 4 are the holes through which the thread passes but which at the same time represent a path for the inlet of water, wind and water vapour, so if they are not properly sealed, the product being manufactured will no longer be waterproof. The same happens with the edges 31 of the facing or overlapping portions 2 that form the seams 3, since it is also necessary to seal them.

A dashed line in Figure 1 marks the direction in which the depth 40 of a stitch 4 of the attachment seam 3 between said portions 2 extends. The depth 40 of the stitch 4 in the case represented is the sum of the thicknesses of the two portions 2 of laminated material joined at the seam 3.

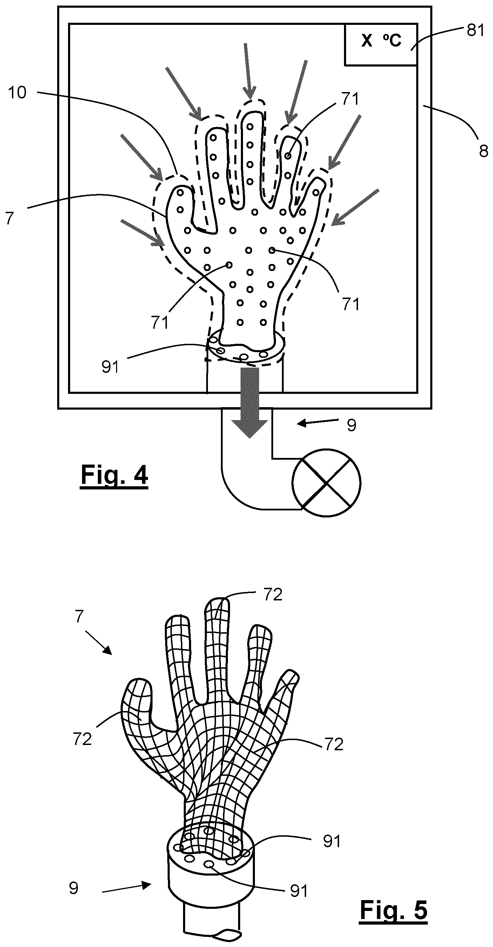

In order to carry out the correct sealing of the stitches 4 and of the edges 31 of the seams 3, the stitched structure 10 with the shape of the product and formed by a plurality of portions 2 attached by seams, is turned inside out. Figure 4 represents the structure 10 with a dashed line for greater clarity. Thus, if it is a stitched structure 10 of a glove, the inner surface of said structure 10 will be exposed to the outside and the same with the rest of the stitched structures 10 of shoes, sports shoes, boots and backpacks, leaving on the outside the surface that corresponds to the inner surface of the stitched structure 10 that forms part of the product in the normal use thereof by a user.

The portion of structure 10 shown in Figures 1 to 3 is not represented turned inside out, but must be turned so that the stitches 4 and the edges 31 are easily accessible to apply a thermally-curable silicone compound material, in uncured liquid state 5, on the seam 3 (including the stitches 4 and the edges 31). The application can be made with a brush, paintbrush or with a spray gun. Figure 2 shows the stitched structure with the applications of said thermally-curable silicone compound material, observing how said material is placed at the two ends of the stitch 4, which are the holes created in the portions 2 of laminated material when the needle and the thread of the seam 3 have passed.

To apply the thermally-curable silicone compound material, in uncured liquid state 5, on the seams 3, the structure 10 turned inside out is fitted tightly on a hollow inner mould or skeleton 7 the outer surface of which reproduces the inner shape of the product (particularly, the inner shape of the structure 10), such as those shown in Figures 4 to 6. The hollow inner mould or skeleton 7 fills the inside of the turned structure 10 and acts as a support of the same to apply the material on the seams 3 and also plays an important role in the following steps of the method that are described below.

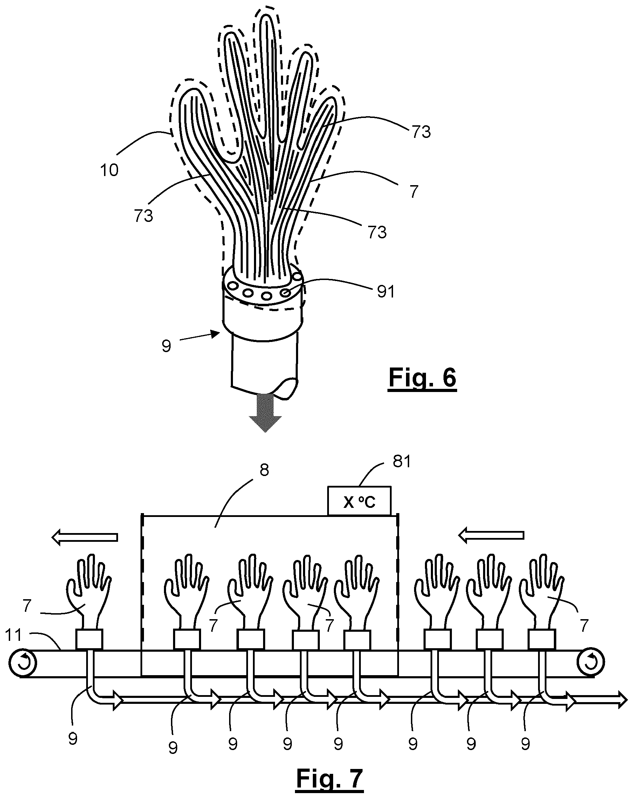

The hollow inner mould or skeleton 7, which can be metallic or made of a plastic material resistant to the curing temperature of the silicone compound material, is provided with vacuum openings, configured as through holes 71 in Figure 4. According to the option in Figure 5, the inner mould or skeleton 7 is formed by a net of resistant threads or wires that, by interlocking, form meshes 72 (vacuum openings) with each other. By contrast, in Figure 6, the hollow inner mould or skeleton 7 is formed by a body built with a 3D printer in which the vacuum openings are configured as slits 73. The vacuum openings communicate the outside of the hollow inner mould or skeleton 7 with the cavity thereof.

After applying the thermally-curable silicone compound material, in uncured liquid state 5, the structure 10 is simultaneously subjected to a heating operation at a curing temperature of said silicone compound material and to a vacuum operation. The vacuum operation consists of sucking the air from outside the structure 10 into the structure 10 by means of pumping means 9 and subsequently extracting it from the inside out, as shown in Figure 4 with thick grey arrows. The structure 10 with applications is fitted on the inner mould or skeleton 7, provided with through holes 71, meshes 72, or slits 73, which is in turn arranged inside the chamber or oven 8 provided with heating means 81 and complemented with pumping means 9 to create the vacuum inside the inner mould or skeleton 7. The air extracted from inside the chamber or oven 8 passes through the through holes 71, meshes 72 or slits 73 to reach the cavity of the mould 7 and be expelled to the outside, out of the chamber or oven 8. Due to the fact that the seams 3 with applications of the silicone compound material of the structure 10 turned inside out are on one of the multiple vacuum openings of the inner mould or skeleton 7, when the vacuum is generated and the air is sucked into the structure 10, said silicone compound material in uncured liquid state 5 will be attracted penetrating into the holes of the stitches 4 and the spaces between the portions 2 joined by a seam 3.

Figure 6, unlike Figure 5, schematically represents (with a dashed line) the structure 10 tightly fitted on the inner mould or skeleton 7. This tightness is also seen in the lower portion, wherein the wrist portion of the glove is tightened around a cylindrical support on which the mould 7 is fixedly placed and which is provided with suction ports 91 that are part of the pumping means 9 for sucking the air in order to create the vacuum inside the mould 7 and the structure 10 arranged above.

What is achieved with the simultaneous heating and vacuum operations is that as the silicone compound material, initially in uncured liquid state 5, cures, becoming a silicone gel that is soft and flexible but very dimensionally stable with temperature, the silicone compound material enters and penetrates the holes of the stitches 4 of the seams 3 by the vacuum created, by which the silicone compound material is pushed by the air outside the stitched structure into the holes of the stitches 4. By creating the vacuum in the chamber or oven 8, in which the structure 10 with applications is located, air is extracted from inside this structure 10 with applications; in fact, air is extracted from inside the inner mould 7 which causes the curable silicone compound, in uncured liquid state 5, to enter and penetrate the holes of the stitches 4 of the seams 3.

With the pumping means 9, the air from the chamber or oven 8 that is outside the structure 10 of the product is sucked in and directed towards the cavity of the hollow inner mould or skeleton 7. The through holes 71, the meshes 72 or the slits 73 of the hollow inner mould 7 lead the air from inside the chamber or oven 8 into the inner mould 7 and from there it is extracted out of the oven 8 or chamber, so that the liquid silicone compound is initially introduced, by effect of the vacuum created, through the stitches 4 and spaces between the meeting points of the laminated portions 2.

The curing temperature and time will depend on the features of the thermally-curable silicone compound. For example, there are silicone compound that cure at 150°C in 30 minutes and others that when cured at 150°C, do so in just 10 minutes. In most cases, the temperature in the chamber or oven 8 will be comprised between 115 and 150°C and the curing will take between 2 and 30 min.

Once the silicone compound is fully cured by heating to the curing or crosslinking temperature, the orifices or holes of the stitches 4 are filled with a silicone gel 6 that is soft and flexible, but very dimensionally stable as mentioned above. The silicone gel 6 has penetrated at least to a depth from the beginning of the hole equivalent to 30% of the total depth of the hole (depth is the total thickness that crosses the stitch 4) when a vacuum is created. Thus, Figure 3 shows how the hole of the stitch 4 has been plugged at both ends by the silicone gel 6, being perfectly sealed and also the edge 31 of the seam 3.

In this way, the structure 10 of stitched portions 2 is already entirely a waterproof structure, since the seams 3 have been perfectly sealed with the silicone gel 6. To finish making the product, the structure 10 will be removed from the inner mould or skeleton 7, it will be turned the right way round to put the structure of stitched portions with the sealed seams 3 the right way round and the finishing operations that are required will be carried out, such as putting a soft inner lining, a rubber or closure on the wrist portion, etc.

Figures 4 and 7 represent two embodiments of a system for carrying out the method described above, that is, for manufacturing a product provided with a cavity such as a glove, a shoe, a sports shoe or a backpack, wherein said product is waterproof, and optionally also windproof and breathable, starting from a structure 10 of portions 2 of laminated material such as laminated leather or similar (laminated synthetic leather, laminated reconstituted leather, etc.), of laminated textile material or of a laminated substrate, stitched together.

The system comprises one or more hollow inner moulds or skeletons 7 as those explained above, provided with through holes 71 or meshes 72 that cross it and communicate the outside of the hollow inner mould or skeleton 7 with the cavity thereof; pumping means 9 to create the vacuum inside each inner mould or skeleton 7; and a chamber or an oven 8 with room to arrange inside one or more hollow inner moulds or skeletons 7, the oven 8 having heating means 81 to reach the curing temperature of the silicone compound material initially in uncured liquid state 5.

Fig. 7 shows that the system comprises a plurality of hollow inner moulds or skeletons 7 arranged on a conveyor belt, band or strap 11 in which each hollow inner mould or skeleton 7 is connected to respective pumping means 9 for creating a vacuum inside the respective inner mould or skeleton 7. The chamber or oven 8 extends longitudinally in the direction of advance of the conveyor belt, band or strap 11 and is configured with two ends provided with means to enable the inlet and outlet of a group of the plurality of inner moulds or skeletons 7 to/from the chamber or oven 8. The pumping means 9 are activated to create the vacuum when the structures 10 turned inside out and with the applications of the silicone compound material initially in uncured liquid state 5 enter the chamber or oven 8, the heating means 81 being in operation. At the outlet of the oven 8, the seams 3 are already sealed with the silicone gel 6, plugging the stitches 4 and the edges 31 of the seams 3.

## Claims

1. A method for manufacturing a product that is waterproof and provided with a cavity, such as a glove, a shoe, a sports shoe, or a backpack, wherein first a structure (10) is made with the shape and outer surface of the product, provided with a cavity, stitching portions (2) of laminated material such as laminated natural or synthetic leather, and/or a laminated material based on leather, and/or a laminated textile material, and/or a laminated substrate, attached together by corresponding seams (3), and then the following steps are carried out:
a) turning the structure (10) inside out and applying a thermally-curable silicone compound material, in uncured liquid state (5), on the seams (3), including the stitches (4) of the seams (3) and the edges (31) of the portions that form the seams (3), obtaining a structure with applications;
b) subjecting the structure (10) with applications of the silicone compound material obtained in step a) to heating at a curing temperature of said material,
c) simultaneously to step b), and by means of pumping means (9), performing a vacuum by sucking the air from outside the structure (10) with applications of the silicone compound material obtained in step a) into the structure (10) through the seams (3) thereof, and from there extracting said air outside.

2. The method according to any one of the preceding claims, **characterised in that** the heating of step b) occurs at a temperature comprised between 115°C and 150°C for a period of between 2 and 30 min.

3. The method according to any one of the preceding claims, **characterised in that** the application on the seams (3) of the thermally-curable silicone compound material, in uncured liquid state (5), of step a) is performed with a brush or a paintbrush.

4. The method according to any one of the preceding claims, **characterised in that** at least steps b) and c) are carried out in a chamber or oven (8) inside of which the structure (10) with applications obtained in step a) is placed, the air that is sucked in from outside the structure (10) being the air present inside the chamber or oven (8), and **in that** the air sucked into the structure (10) in step c) is extracted from inside the structure (10) to the outside of the chamber or oven (8) by the pumping means (9).

5. The method according to claim 4, **characterised in that** the application on the seams (3) of the thermally-curable silicone compound material, in uncured liquid state (5) of step a) is performed inside the chamber or oven (8) in which steps b) and c) are carried out.

6. The method according to claim 4, **characterised in that** the application on the seams (3) of the thermally-curable silicone compound material, in uncured liquid state (5) of step a) is performed outside the chamber or oven (8) in which steps b) and c) are carried out.

7. The method according to any one of the preceding claims, **characterised in that** the application on the seams (3) of the thermally-curable silicone compound material, in uncured liquid state (5) of step a) is performed with the structure (10) turned inside out tightly fitted on a hollow inner mould or skeleton (7) the outer surface of which reproduces the inner shape of the structure (10) of the product, the inner mould or skeleton (7) being provided with a plurality of vacuum openings which communicate the outside of the inner mould or skeleton (7) with the inner cavity thereof.

8. The method according to any one of the preceding claims, **characterised in that** steps b) and c) are performed with the structure (10) turned inside out with applications obtained in step a) fitted on a hollow inner mould or skeleton (7) the outer surface of which reproduces the inner shape of the structure (10) of the product, the inner mould or skeleton (7) being provided with a plurality of vacuum openings that communicate the outside of the inner mould or skeleton (7) with the inner cavity thereof, the vacuum openings being crossed by air from outside the structure (10) that is sucked into the structure (10) in step c) and from there extracted outside.

9. The method according to claims 7 and 8, **characterised in that** the inner mould or skeleton (7) on which the structure (10) is fitted turned inside out for the application on the seams (3) of the thermally-curable silicone compound material, in uncured liquid state (5), of step a) is the same inner mould or skeleton (7) on which the structure (10) is fitted when steps b) and c) are performed.

10. The method according to any one of claims 7 to 9, **characterised in that** the vacuum openings that communicate the outside of the inner mould or skeleton (7) with the inner cavity thereof are configured as through holes (71), as meshes (72) of a net from which the inner mould or skeleton (7) is made, or as elongated slits (73).

11. The method according to any one of claims 7 to 10, **characterised in that** the hollow inner mould or skeleton (7) is made of metal or a plastic material that is dimensionally stable at the curing temperature of the thermally-curable silicone compound material that is applied in uncured liquid state (5) in step a).

12. The method according to any one of the preceding claims, **characterised in that** the portions (2) of laminated material are portions of natural or synthetic leather attached to a plastic sheet or membrane, and/or portions of reconstituted leather or bicast leather attached to a plastic sheet or membrane (22).

13. The method according to any one of claims 1 to 11, **characterised in that** the laminated textile material and/or the laminated substrate are woven or non-woven materials comprising natural fibres and/or synthetic fibres, attached to a plastic sheet or membrane (22).

14. A system for manufacturing a product that is waterproof and provided with a cavity, such as a glove, a shoe, a sports shoe or backpack, wherein the product comprises a structure (10) with the shape and outer surface of the product, provided with a cavity, the structure (10) being made up of portions (2) of laminated material such as laminated natural or synthetic leather, and/or a laminated material based on leather, and/or a laminated textile material, and/or a laminated substrate, stitched and attached together by corresponding seams (3), that comprises:
- a plurality of hollow inner moulds or skeletons (7) the outer surface of which reproduces the inner shape of the structure (10) of the product, each inner mould or skeleton (7) being provided with a plurality of vacuum openings that communicate the outside of the inner mould or skeleton (7) with the cavity thereof;
- a chamber or an oven (8) with room to arrange inside a group of the plurality of hollow inner moulds or skeletons (7), with heating means (81),
- respective pumping means (9) to create the vacuum inside a respective inner mould or skeleton (7), capable of being activated when the respective hollow inner mould or skeleton (7) is arranged inside the chamber or oven (8), sucking the air from outside the inner mould or skeleton (7) into the cavity thereof through the vacuum openings and extracting said sucked air out of the cavity and the chamber or oven (8), and
- a conveyor belt, band or strap (11) on which the plurality of hollow inner moulds or skeletons (7) is arranged and in which each hollow inner mould or skeleton (7) is connected to respective pumping means (9) suitable for creating a vacuum inside the respective inner mould or skeleton (7), the chamber or oven (8) extending longitudinally in the direction of advance of the conveyor belt, band or strap (11), and being configured with two ends provided with means to enable the inlet and outlet of a group of the plurality of inner moulds or skeletons (7) to/from the chamber or oven (8).

15. The system for manufacturing a product that is waterproof and provided with a cavity, such as a glove, a shoe, a sports shoe or a backpack, according to claim 14, **characterised in that** the vacuum openings that communicate the outside of each inner mould or skeleton (7) with the cavity thereof are configured as through holes (71), as meshes (72) of a net from which the inner mould or skeleton (7) is made, or as elongated slits (73).

## Patentansprüche

1. Verfahren zur Herstellung eines Produkts, welches wasserdicht ist und mit einem Hohlraum versehen ist, wie ein Handschuh, ein Schuh, ein Sportschuh oder ein Rucksack, wobei zunächst eine Struktur (10) Gestalt und Außenfläche des Produkts, versehen mit einem Hohlraum, gefertigt wird, indem Teile (2) aus laminiertem Material wie laminiertem Natur- oder Kunstleder, und/oder einem laminierten Material basierend auf Leder, und/oder einem laminierten Textilmaterial, und/oder einem laminierten Substrat, aneinander mittels entsprechender Nähte (3) befestigt, genäht werden, und dann die folgenden Schritte durchgeführt werden:
a) das Umstülpen der Struktur (10) und das Auftragen eines thermisch härtbaren Silikon-Verbundmaterial, im ungehärteten flüssigen Zustand (5), auf die Nähte (3), einschließlich der Stiche (4) der Nähte (3) und der Ränder (31) der Teile, welche die Nähte (3) bilden, unter Erhalt einer Struktur mit Auftragungen;
b) das Aussetzen der Struktur (10) mit Auftragungen des in Schritt a) erhaltenen Silikon-Verbundmaterials einer Erwärmung bei einer Härtungstemperatur des genannten Materials,
c) gleichzeitig mit Schritt b), und mittels Pumpmittel (9), das Ausüben eines Vakuums, indem die Luft von außerhalb der Struktur (10) mit Auftragungen des in Schritt a) erhaltenen Silikon-Verbundmaterials in die Struktur (10) durch die Nähte (3) derselben gesaugt wird, und von dort das Absaugen der genannten Luft nach außen.

2. Verfahren nach einem der vorhergehenden Ansprüche, **dadurch gekennzeichnet, dass** die Erwärmung von Schritt b) bei einer Temperatur, welche zwischen 115°C und 150°C liegt, während eines Zeitraums zwischen 2 und 30 min stattfindet.

3. Verfahren nach einem der vorhergehenden Ansprüche, **dadurch gekennzeichnet, dass** die Auftragung auf die Nähte (3) des thermisch härtbaren Silikon-Verbundmaterials, im ungehärteten flüssigen Zustand (5), von Schritt a) mit einem Pinsel oder einem Farbpinsel durchgeführt wird.

4. Verfahren nach einem der vorhergehenden Ansprüche, **dadurch gekennzeichnet, dass** mindestens Schritte b) und c) in einer Kammer oder einem Ofen (8) durchgeführt werden, innerhalb welcher/welches die in Schritt erhaltene a) Struktur (10) mit Auftragungen platziert wird, wobei die Luft, welche von außerhalb der Struktur (10) eingesaugt wird, die innerhalb der Kammer oder des Ofens (8) vorhandene Luft ist, und dass die in Schritt c) in die Struktur (10) eingesaugte Luft von innerhalb der Struktur (10) außerhalb der Kammer oder des Ofens (8) mittels der Pumpmittel (9) abgesaugt wird.

5. Verfahren nach Anspruch 4, **dadurch gekennzeichnet, dass** die Auftragung auf die Nähte (3) des thermisch härtbaren Silikon-Verbundmaterials, im ungehärteten flüssigen Zustand (5), von Schritt a) innerhalb der Kammer oder des Ofens (8) durchgeführt wird, in welcher/welchem Schritte b) und c) durchgeführt werden.

6. Verfahren nach Anspruch 4, **dadurch gekennzeichnet, dass** die Auftragung auf die Nähte (3) des thermisch härtbaren Silikon-Verbundmaterials, im ungehärteten flüssigen Zustand (5), von Schritt a) außerhalb der Kammer oder des Ofens (8) durchgeführt wird, in welcher/welchem Schritte b) und c) durchgeführt werden.

7. Verfahren nach einem der vorhergehenden Ansprüche, **dadurch gekennzeichnet, dass** die Auftragung auf die Nähte (3) des thermisch härtbaren Silikon-Verbundmaterials, im ungehärteten flüssigen Zustand (5), von Schritt a) mit der umgestülpten Struktur (10) dicht auf einer hohlen Innenform oder einem hohlen Gerüst (7) aufgesetzt durchgeführt wird, wobei die Außenfläche derselben/desselben die innere Gestalt der Struktur (10) des Produkts nachbildet, wobei die Innenform oder das Gerüst (7) mit einer Vielzahl von Vakuumöffnungen versehen ist, welche das Äußere der Innenform oder des Gerüsts (7) mit dem inneren Hohlraum derselben/desselben verbinden.

8. Verfahren nach einem der vorhergehenden Ansprüche, **dadurch gekennzeichnet, dass** Schritte b) und c) mit der in Schritt a) erhaltenen, umgestülpten Struktur (10) mit Auftragungen auf einer hohlen Innenform oder einem hohlen Gerüst (7) aufgesetzt durchgeführt werden, deren/dessen Außenfläche die innere Gestalt der Struktur (10) des Produkts nachbildet, wobei die Innenform oder das Gerüst (7) mit einer Vielzahl von Vakuumöffnungen versehen ist, welche das Äußere der Innenform oder des Gerüsts (7) mit dem inneren Hohlraum derselben/desselben verbinden, wobei die Vakuumöffnungen von Luft von außerhalb der Struktur (10) durchquert werden, welche in Schritt c) in die Struktur (10) gesaugt wird und von dort nach außen abgesaugt wird.

9. Verfahren nach den Ansprüchen 7 und 8, **dadurch gekennzeichnet, dass** die Innenform oder das Gerüst (7), auf welcher/welchem die Struktur (10) für die Auftragung auf die Nähte (3) des thermisch härtbaren Silikon-Verbundmaterials, im ungehärteten flüssigen Zustand (5), von Schritt a) umgestülpt aufgesetzt wird, die gleiche Innenform oder das gleiche Gerüst (7) ist, auf welcher/welchem die Struktur (10) aufgesetzt wird, wenn Schritte b) und c) durchgeführt werden.

10. Verfahren nach einem der Ansprüche 7 bis 9, **dadurch gekennzeichnet, dass** die Vakuumöffnungen, welche das Äußere der Innenform oder des Gerüsts (7) mit dem inneren Hohlraum derselben/desselben verbinden, als Durchgangslöcher (71), als Maschen (72) eines Netzes, aus welchem die Innenform oder das Gerüst (7) gefertigt ist, oder als langgestreckte Schlitze (73) ausgebildet sind.

11. Verfahren nach einem der Ansprüche 7 bis 10, **dadurch gekennzeichnet, dass** die hohle Innenform oder das hohle Gerüst (7) aus Metall oder einem Kunststoffmaterial gefertigt ist, welches bei der Härtungstemperatur des thermisch härtbaren Silikon-Verbundmaterials, welches im ungehärteten flüssigen Zustand (5) in Schritt a) aufgetragen wird, formstabil ist.

12. Verfahren nach einem der vorhergehenden Ansprüche, **dadurch gekennzeichnet, dass** die Teile (2) aus laminiertem Material Teile aus Natur- oder Kunstleder, an einer Kunststofffolie oder -membran befestigt, und/oder Teile aus rekonstituiertem Leder oder Bicast-Leder, an einer Kunststofffolie oder -membran (22) befestigt, sind.

13. Verfahren nach einem der Ansprüche 1 bis 11, **dadurch gekennzeichnet, dass** das laminierte Textilmaterial und/oder das laminierte Substrat gewebte oder nichtgewebte Materialien sind, welche Naturfasern und/oder Kunstfasern umfassen, welche an einer Kunststofffolie oder -membran (22) befestigt sind.

14. System zur Herstellung eines Produkts, welches wasserdicht ist und mit einem Hohlraum versehen ist, wie ein Handschuh, ein Schuh, ein Sportschuh oder ein Rucksack, wobei das Produkt eine Struktur (10) mit der Gestalt und Außenfläche des Produkts, mit einem Hohlraum versehen, umfasst, wobei die Struktur (10) aus Teilen (2) aus laminiertem Material wie laminiertem Natur- oder Kunstleder, und/oder einem laminiertem Material basierend auf Leder, und/oder einem laminiertem Textilmaterial, und/oder einem laminiertem Substrat, aneinander mittels entsprechender Nähte (3) genäht und befestigt, gebildet ist, welches Folgendes umfasst:
- eine Vielzahl von hohlen Innenformen oder Gerüsten (7), deren Außenfläche die innere Gestalt der Struktur (10) des Produkts nachbildet, wobei jede Innenform oder jedes Gerüst (7) mit einer Vielzahl von Vakuumöffnungen versehen ist, welche das Äußere der Innenform oder des Gerüsts (7) mit dem Hohlraum derselben/desselben verbinden;
- eine Kammer oder einen Ofen (8) mit Raum zur Anordnung innerhalb derselben/desselben einer Gruppe der Vielzahl von hohlen Innenformen oder Gerüsten (7), mit Erwärmungsmitteln (81),
- jeweilige Pumpmittel (9), um das Vakuum innerhalb einer jeweiligen Innenform oder eines jeweiligen Gerüsts (7) zu erstellen, welche in der Lage sind, aktiviert zu werden, wenn die jeweilige hohle Innenform oder das jeweilige hohle Gerüst (7) innerhalb der Kammer oder des Ofens (8) angeordnet ist, die Luft von außerhalb der Innenform oder des Gerüsts (7) in den Hohlraum derselben/desselben durch die Vakuumöffnungen zu saugen und die genannte gesaugte Luft aus dem Hohlraum und der Kammer oder des Ofens (8) abzusaugen, und
- einen Fördergurt, ein Förderband oder einen Förderriemen (11), auf welchem die Vielzahl von hohlen Innenformen und Gerüsten (7) angeordnet ist und in welchem jede hohle Innenform oder jedes hohle Gerüst (7) an jeweilige Pumpmittel (9) angeschossen ist, welche dafür geeignet sind, ein Vakuum innerhalb der jeweiligen Innenform oder des jeweiligen Gerüsts (7) zu erstellen, wobei sich die Kammer oder der Ofen (8) längs in die Vorschubrichtung des Fördergurts, Förderbands oder Förderriemens (11) erstreckt, und mit zwei Enden ausgebildet ist, welche mit Mitteln versehen sind, um den Eingang einer Gruppe der Vielzahl von Innenformen oder Gerüsten (7) in die Kammer oder den Ofen (8) und den Ausgang daraus zu ermöglichen.

15. System zur Herstellung eines Produkts, welches wasserdicht ist und mit einem Hohlraum versehen ist, wie ein Handschuh, ein Schuh, ein Sportschuh oder ein Rucksack, nach Anspruch 14, **dadurch gekennzeichnet, dass** die Vakuumöffnungen, welche das Äußere jeder Innenform oder jedes Gerüsts (7) mit dem Hohlraum derselben/desselben verbinden, als Durchgangslöcher (71), als Maschen (72) eines Netzes, aus welchen die Innenform oder das Gerüst (7) gefertigt ist, oder als langgestreckte Schlitze (73) ausgebildet sind.

## Revendications

1. Procédé permettant de fabriquer un produit qui est imperméable et pourvu d'une cavité, tel qu'un gant, une chaussure, une chaussure de sport ou un sac à dos, dans lequel d'abord une structure (10) est faite avec la forme et la surface extérieure du produit, pourvue d'une cavité, en cousant des parties (2) de matériau laminé tel que du cuir naturel ou synthétique laminé, et/ou un matériau laminé à base de cuir, et/ou un matériau textile laminé, et/ou un substrat laminé, attachées ensemble par des coutures correspondantes (3), et ensuite les étapes suivantes sont exécutées :
a) retourner la structure (10) et appliquer un matériau de composé de silicone thermodurcissable, à l'état liquide non durci (5), sur les coutures (3), incluant les points (4) des coutures (3) et les bords (31) des parties qui forment les coutures (3), en obtenant une structure avec des applications ;
b) soumettre la structure (10) avec des applications du matériau de composé de silicone obtenue dans l'étape a) à un chauffage à une température de durcissement dudit matériau,
c) simultanément à l'étape b), et à travers de moyens de pompage (9), réaliser un vide en aspirant l'air depuis l'extérieur de la structure (10) avec des applications du matériau de composé de silicone obtenue dans l'étape a) dans la structure (10) à travers les coutures (3) de celle-ci, et à partir de là extraire ledit air à l'extérieur.

2. Procédé selon l'une quelconque des revendications précédentes, **caractérisé en ce que** le chauffage de l'étape b) se produit à une température comprise entre 115°C et 150°C pendant une période d'entre 2 et 30 min.

3. Procédé selon l'une quelconque des revendications précédentes, **caractérisé en ce que** l'application sur les coutures (3) du matériau de composé de silicone thermodurcissable, à l'état liquide non durci (5), de l'étape a) est réalisée avec une brosse ou un pinceau.

4. Procédé selon l'une quelconque des revendications précédentes, **caractérisé en ce qu'**au moins les étapes b) et c) sont effectuées dans une chambre ou four (8) à l'intérieur duquel est placée la structure (10) avec des applications obtenue dans l'étape a), l'air qui est aspiré depuis l'extérieur de la structure (10) étant l'air présent à l'intérieur de la chambre ou four (8), et **en ce que** l'air aspiré dans la structure (10) dans l'étape c) est extrait depuis l'intérieur de la structure (10) à l'extérieur de la chambre ou four (8) par les moyens de pompage (9).

5. Procédé selon la revendication 4, **caractérisé en ce que** l'application sur les coutures (3) du matériau de composé de silicone thermodurcissable, à l'état liquide non durci (5), de l'étape a) est réalisée à l'intérieur de la chambre ou four (8) dans lequel les étapes b) et c) sont effectuées.

6. Procédé selon la revendication 4, **caractérisé en ce que** l'application sur les coutures (3) du matériau de composé de silicone thermodurcissable, à l'état liquide non durci (5), de l'étape a) est réalisée à l'extérieur de la chambre ou four (8) dans lequel les étapes b) et c) sont effectuées.

7. Procédé selon l'une quelconque des revendications précédentes, **caractérisé en ce que** l'application sur les coutures (3) du matériau de composé de silicone thermodurcissable, à l'état liquide non durci (5), de l'étape a) est réalisée avec la structure (10) retournée étroitement ajustée sur un moule intérieur creux ou squelette (7) dont la surface extérieure reproduit la forme intérieure de la structure (10) du produit, le moule intérieur ou squelette (7) étant pourvu d'une pluralité d'ouvertures de vide qui communiquent l'extérieur du moule intérieur ou squelette (7) avec la cavité intérieure de celui-ci.

8. Procédé selon l'une quelconque des revendications précédentes, **caractérisé en ce que** les étapes b) et c) sont réalisées avec la structure (10) retournée avec des applications obtenue dans l'étape a) ajustée sur un moule intérieur creux ou squelette (7) dont la surface extérieure reproduit la forme intérieure de la structure (10) du produit, le moule intérieur ou squelette (7) étant pourvu d'une pluralité d'ouvertures de vide qui communiquent l'extérieur du moule intérieur ou squelette (7) avec la cavité intérieure de celui-ci, les ouvertures de vide étant traversées par de l'air depuis l'extérieur de la structure (10) qui est aspiré dans la structure (10) dans l'étape c) et à partir de là extrait à l'extérieur.

9. Procédé selon les revendications 7 et 8, **caractérisé en ce que** le moule intérieur ou squelette (7) sur lequel la structure (10) est ajustée retournée pour l'application sur les coutures (3) du composé de silicone thermodurcissable, à l'état liquide non durci (5), de l'étape a) est le même moule intérieur ou squelette (7) sur lequel la structure (10) est ajustée lorsque les étapes b) et c) sont réalisées.

10. Procédé selon l'une quelconque des revendications 7 à 9, **caractérisé en ce que** les ouvertures de vide qui communiquent l'extérieur du moule intérieur ou squelette (7) avec la cavité intérieure de celui-ci sont configurées comme des trous traversants (71), comme des mailles (72) d'un filet à partir duquel est fait le moule intérieur ou squelette (7), ou comme des fentes allongées (73).

11. Procédé selon l'une des revendications 7 à 10, **caractérisé en ce que** le moule intérieur creux ou squelette (7) est fait en métal ou en un matériau plastique qui est dimensionnellement stable à la température de durcissement du matériau de composé de silicone thermodurcissable qui est appliqué à l'état liquide non durci (5) dans l'étape a).

12. Procédé selon l'une quelconque des revendications précédentes, **caractérisé en ce que** les parties (2) de matériau laminé sont des parties de cuir naturel ou synthétique attachées à une feuille de plastique ou membrane, et/ou des parties de cuir reconstitué ou de cuir bycast attachées à une feuille de plastique ou membrane (22).

13. Procédé selon l'une quelconque des revendications 1 à 11, **caractérisé en ce que** le matériau textile laminé et/ou le substrat laminé sont des matériaux tissés ou non tissés comprenant des fibres naturelles et/ou des fibres synthétiques, attachés à une feuille de plastique ou membrane (22).

14. Système permettant de fabriquer un produit qui est imperméable et pourvu d'une cavité, tel qu'un gant, une chaussure, une chaussure de sport ou un sac à dos, dans lequel le produit comprend une structure (10) avec la forme et la surface extérieure du produit, pourvue d'une cavité, la structure (10) étant constituée de parties (2) de matériau laminé tel que du cuir naturel ou synthétique laminé, et/ou un matériau laminé à base de cuir, et/ou un matériau textile laminé, et/ou un substrat laminé, cousues et attachées ensemble par des coutures correspondantes (3), qui comprend :
- une pluralité de moules intérieurs creux ou squelettes (7) dont la surface extérieure reproduit la forme intérieure de la structure (10) du produit, chaque moule intérieur ou squelette (7) étant pourvu d'une pluralité d'ouvertures de vide qui communiquent l'extérieur du moule intérieur ou squelette (7) avec la cavité de celui-ci ;
- une chambre ou un four (8) avec l'espace pour disposer à l'intérieur un groupe de la pluralité de moules intérieurs creux ou squelettes (7), avec des moyens de chauffage (81),
- des moyens de pompage respectifs (9) pour créer le vide à l'intérieur d'un moule intérieur ou squelette respectif (7), pouvant être activés lorsque le moule intérieur creux ou squelette respectif (7) est placé à l'intérieur de la chambre ou four (8), aspirant l'air depuis l'extérieur du moule intérieur ou squelette (7) dans la cavité de celui-ci à travers les ouvertures de vide et extrayant ledit air aspiré hors de la cavité et de la chambre ou four (8), et
- une tapis convoyeur, bande ou courroie (11) sur lequel la pluralité de moules intérieurs creux ou squelettes (7) sont disposés et dans lequel chaque moule intérieur creux ou squelette (7) est relié à des moyens de pompage respectifs (9) adaptés pour créer un vide à l'intérieur du moule intérieur ou squelette respectif (7), la chambre ou four (8) s'étendant longitudinalement dans la direction d'avance du tapis convoyeur, bande ou courroie (11), et étant configuré avec deux extrémités pourvues de moyens pour permettre l'entrée et la sortie d'un groupe de la pluralité de moules intérieurs ou squelettes (7) vers/depuis la chambre ou four (8).

15. Système permettant de fabriquer un produit qui est imperméable et pourvu d'une cavité, tel qu'un gant, une chaussure, une chaussure de sport ou un sac à dos, selon la revendication 14, **caractérisé en ce que** les ouvertures de vide qui communiquent l'extérieur de chaque moule intérieur ou squelette (7) avec la cavité de celui-ci sont configurées comme des trous traversants (71), comme des mailles (72) d'un filet à partir duquel est fait le moule intérieur ou squelette (7), ou comme des fentes allongées (73).
